# EUROPEAN PATENT SPECIFICATION

(11) **EP 2 798 127 B1**
(45) Date of publication and mention of the grant of the patent: **05.09.2018**
(21) Application number: 12814058.9
(22) Date of filing: 14.12.2012
(51) Int. Cl.: E02F 9/28

(54) **WEAR PAD ASSEMBLY**
VERSCHLEISSSCHUTZANORDNUNG
ENSEMBLE DE TAMPON D'USURE

(30) Priority: 30.12.2011 GB 201122481
(43) Date of publication of application: 05.11.2014
(73) Proprietor: Caterpillar Inc., Peoria, IL 61626-9510 (US)
(72) Inventor: SHEEHAN, Paul, Anthony, Leicester Forest East LE3 3JX (GB); FORRESTER, Adrian, Paul, Leicester LE9 2DR (GB)
(74) Representative: BRP Renaud & Partner mbB Rechtsanwälte Patentanwälte Steuerberater
(86) International application number: PCT/US2012/069683
(87) International publication number: WO 2013/101501

(56) References cited:
- WO-A1-2011/127536
- GB-A- 1 475 665
- US-A- 783 764
- US-A- 5 775 013
- US-A- 6 041 529
- US-A1- 2005 241 195
- US-A1- 2006 042 130
- US-A1- 2006 145 489

## Description

### Technical Field

This disclosure is directed to a wear pad assembly for a work tool, and in particular to a wear pad assembly for use with work tools having bucket-like elements, such as front end loaders.

### Background

Work machines, such as backhoe loaders, are commonly operated on hard finished surfaces such as tarmac work surfaces or roads. In order to stabilise the machine when working, rear stabiliser pads and a front end work tool, such as a loader, are lowered to ground level. However, the forces on the surface resulting from the weight and movement of the machine can result in damage to the surface, which may lead to a penalty or re-work costs for the operator or contractor.

In order to address this problem, it is known to affix wear pads to the rear stabilisers, as described in US-B-6,386,586. Such wear pads have a lower hardness than the road surface, and thus erode in preference thereto.

Similarly, wear pads may also be affixed to the front end work tool. US-A-2006/0145489 discloses an apparatus for protecting a floor or surface and a bucket or scoop from costly wear and/or damage during material handling operations, wherein the wear pad is configured to be bolted to a bucket or scoop.

However, the front end work tool is typically used for tasks such as lifting, digging, and loading, which tasks may be impeded by the presence of wear pads. Therefore, it would be desirable to have a wear pad which can be quickly attached to a work tool, such as a front end loader, in a non-permanent manner.

US-A-2005/241195 discloses a lip assembly including side portions with projections.

GB-A-1475665 discloses a corner tooth assembly for an earthmoving implement.

US-A-5775013 discloses an excavating bucket grading attachment.

US-A-783764 discloses a tooth for excavating shovels.

### Summary

According to one aspect of the present disclosure there is provided a wear pad assembly for a work tool comprising a bucket-like element having an edge provided with one or more holes, the wear pad assembly comprising:
a wear-resistant pad;
a mounting bracket configured for attachment to the wear-resistant pad (12); and
a quick-release pin for securing the wear pad assembly to the work tool edge; characterised in that
the mounting bracket further comprises an attachment surface for attachment to the wear-resistant pad, the attachment surface comprising one or more shear lugs.

One exemplary embodiment of a wear pad assembly is as described with reference to, and as shown in the accompanying drawings.

### Brief Description of the Drawings

Figure 1 is a perspective view of a work machine having a wear pad assembly according to the present disclosure secured thereto;
Figure 2 is an exploded perspective view of the wear pad assembly of Figure 1;
Figure 3 is a cross-sectional view of the wear pad assembly of Figure 2;
Figure 4 is a cross-sectional perspective view of the wear pad of Figures 2 and 3 located on a work tool of a work machine; and
Figure 5 is a perspective view of the wear pad of Figures 2 to 4 located on a work tool of a work machine and secured in place using a linchpin.

### Detailed Description

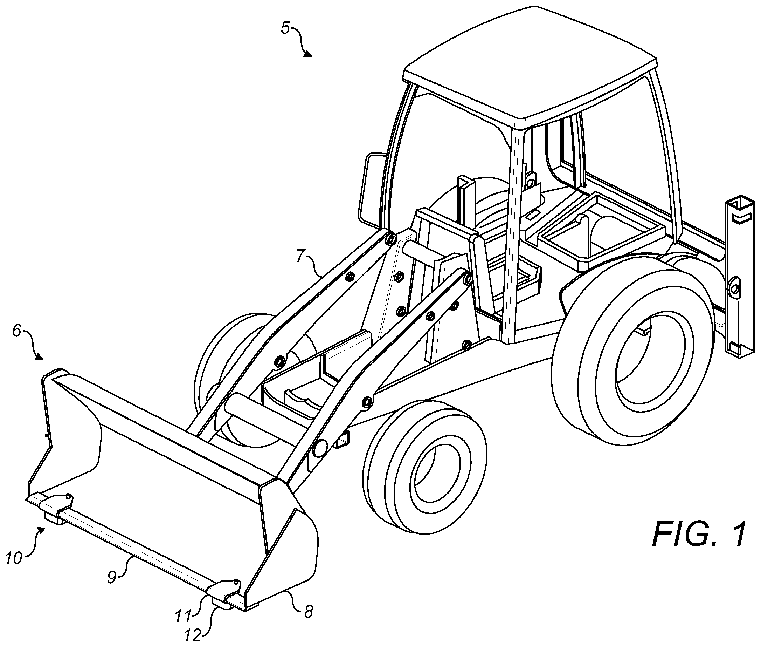

Figure 1 illustrates a work machine 5 having a front end work tool 6, which in the illustrated embodiment is a front end loader. The work tool 6 may be pivotally connected to the work machine 5 via one of more linkage members 7. The work tool 6 may comprise a bucket-like element 8 having an edge 9, commonly known as a cutting edge, which is provided with one or more mounting holes (not shown). The work tool 6 is typically made of steel or a similar material. At least one wear pad assembly 10 is removably attachable to the edge 9 as shown in Figure 1.

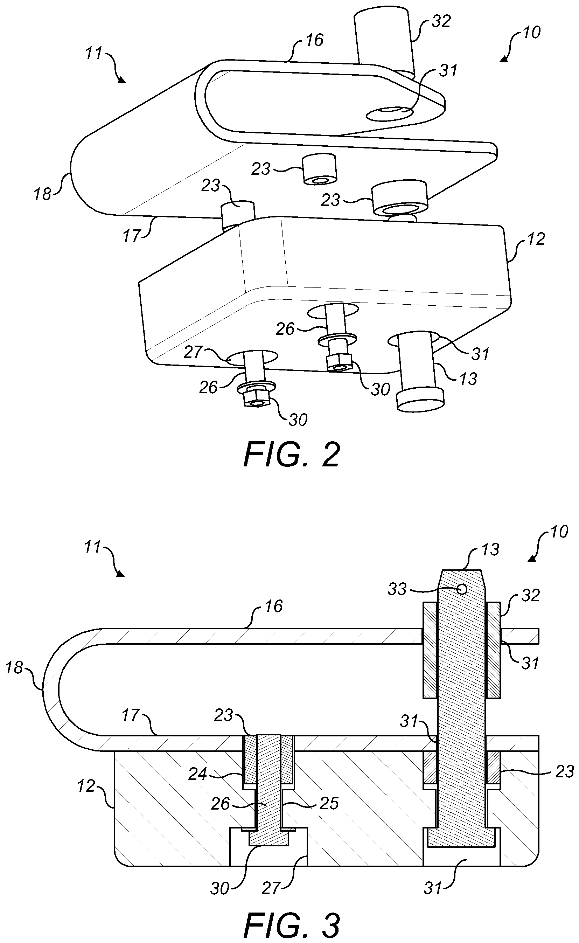

Figures 2 and 3 illustrate the wear pad assembly 10 in greater detail. The wear pad assembly 10 comprises three main components, namely a mounting bracket 11, a wear-resistant pad 12, and a pin 13.

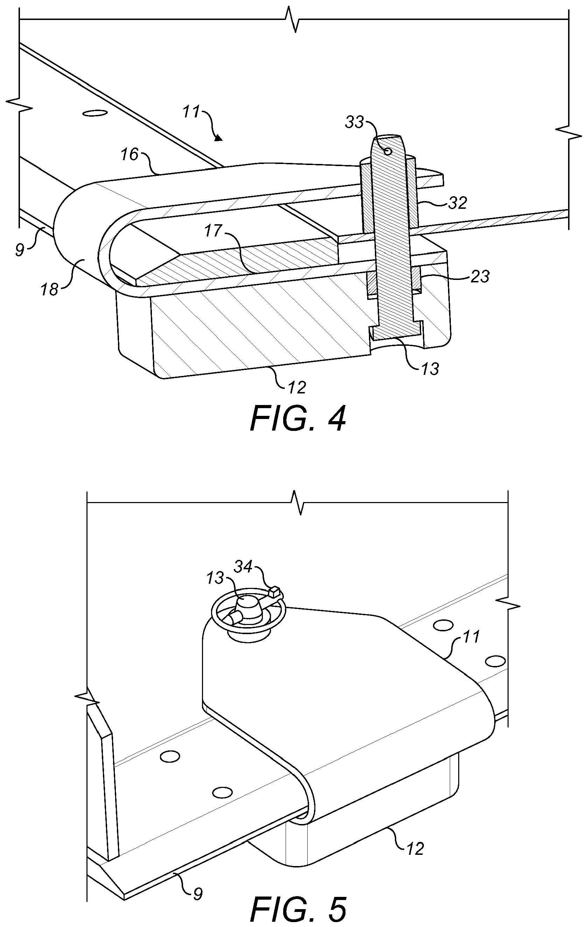

The mounting bracket 11 may be a generally C-shaped component, having a pair of generally parallel flanges 16,17, comprising an upper flange 16 and a lower flange 17, joined by a curved portion 11. The bracket 11 is thus configured for location on the edge 9 of the work tool 6, as shown in Figure 4. At least one pair of coaxial holes 31 may be provided in the flanges 16,17, for attachment of the mounting bracket 11 to the edge 9 of the work tool 6.

The mounting bracket 11 may be provided with shear lugs 23 for assisting in the location of the wear-resistant pad 12 on the mounting bracket 11. The shear lugs 23 also provide stability to the wear-resistant pad 12, as they resist relative transverse movement between the mounting bracket 11 and the wear-resistant pad 12 when the work machine 5 is being operated.

The mounting bracket 11 may be made from steel or any other suitable material. It may be manufactured by any suitable method, such as fabrication or casting.

The wear-resistant pad 12 may be provided with blind holes 24 for receiving the shear lugs 23 of the mounting bracket 11. The wear-resistant pad 12 may also comprise through holes 25 for receiving fasteners 26, such as bolts. The through holes 25 may be provided with counterbores 27 such that the heads 30 of the fasteners 26 sit flush with or below the outer surface of the wear-resistant pad 12. The blind holes 24 and the through holes 25 may be coincident. This arrangement enables service replacement of the wear-resistant pad 12 as a singular item.

The wear-resistant pad 12 may be made of a wear-resistant compound, such as polyurethane or neoprene, or any suitable rubber material. The wear-resistant pad 12 may be manufactured from a moulding process. The size of the wear-resistant pad 12, in terms of surface area and thickness, is selected according to front end machine weight distribution and surface pressure of the machine 5 on which the wear-resistant pad 12 is to be used.

The pin 13 is used to attach the mounting bracket 11 and wear-resistant pad 12 to the work tool 6. The pin 13 may be a quick-release type pin, and passes through coaxial holes 31 in the wear-resistant pad 12 and the flanges 16,17 of the mounting bracket 11. A loose collar 32 may be provided to act as a spacer to take up clearance between the pin 13 and the coaxial hole 31 in the upper flange 16 of the mounting bracket 11, and to ensure a close fit therebetween. The pin 13 may comprise a locking mechanism, such as a hole 33 in its upper end for receiving a split pin or a quick-release linchpin 34 (as shown in Figure 5).

The pin 13 may be made of a steel material, which may be plated in order to enhance its corrosion resistance.

The pin 13 enables the wear pad assembly 10 to be quickly and easily fitted to a variety of work tools 6 having one or more mounting holes. The linchpin 34 or other locking mechanism may be fitted and removed without tools.

### Industrial Applicability

The wear pad assembly 10 has industrial applicability in the field of work machines, and may be used on a variety of different work machines, including backhoe loaders, which have a work tool 6 comprising a bucket-like element 8 such as a loader.

The wear pad assembly 10 is attached and secured to the work tool 6 when it is required to lower the work tool 6 to the ground to act as a stabilising leg for the work machine 5. With the work tool 6 raised off the ground, the C-shaped mounting bracket 11 is located on the edge 9 of the work tool 6 over a hole provided thereon. The collar 32 may be positioned in the aligned hole 31 of the mounting bracket 11. The pin 13 is then inserted through the aligned holes 31, and is secured in place using a linchpin 34 or any other suitable locking mechanism.

The wear pad assembly 10 according to the disclosure enables a machine operator to easily and quickly fit a wear pad to a front-end bucket 8.

## Claims

1. A wear pad assembly (10) for a work tool (6) comprising a bucket-like element (8) having an edge (9) provided with one or more holes, the wear pad assembly (10) comprising:
a wear-resistant pad (12);
a mounting bracket (11) configured for attachment to the wear-resistant pad (12); and
a quick-release pin (13) for securing the wear pad assembly (10) to the work tool edge (9); **characterised in that**
the mounting bracket (11) further comprises an attachment surface for attachment to the wear-resistant pad (12), the attachment surface comprising one or more shear lugs (23).

2. A wear pad assembly (10) according to claim 1, wherein the mounting bracket (11) is configured for releasable attachment to the wear-resistant pad (12).

3. A wear pad assembly (10) according to claim 1 or claim 2, wherein the mounting bracket (11) comprises a generally C-shaped element.

4. A wear pad assembly (10) according to any one of the preceding claims, wherein the mounting bracket (11) comprises one or more pairs of coaxial holes (31) for receiving the pin (13).

5. A wear pad assembly (10) according to claim 4, further comprising a loose collar (32) for taking up clearance between the one or more coaxial holes (31) and the pin (13).

6. A wear pad assembly (10) according to claim 1, wherein the wear-resistant pad (12) comprises one or more blind holes (24) for receiving the shear lugs (23) of the mounting bracket (11).

7. A wear pad assembly (10) according to any one of the preceding claims, wherein the wear-resistant pad (12) comprises one or more through holes (25) for receiving fasteners (26) for attachment of the wear-resistant pad (12) to the mounting bracket (11).

8. A wear pad assembly (10) according to claim 7, wherein the one or more through holes (25) are counterbored.

9. A wear pad assembly (10) according to claim 7 or claim 8, as dependent on claim 7, wherein the one or more blind holes (24) and the one or more through holes (25) are coincident.

10. A wear pad assembly (10) according to any one of the preceding claims, further comprising a locking mechanism (34) for locking the pin (13).

11. A wear pad assembly (10) according to claim 10, wherein the locking mechanism (34) is a linchpin.

12. A work machine having a work tool (6) comprising a bucket-like element (8) having an edge (9) provided with one or more holes, and further comprising at least one wear pad assembly (10) according to any one of the preceding claims.

13. A work machine according to claim 12, wherein the work tool (6) is a bucket.

14. A work machine according to claim 13, wherein the bucket is a loader bucket.

## Patentansprüche

1. Verschleißschutzanordnung (10) für ein Arbeitswerkzeug (6) umfassend ein schaufelähnliches Element (8), das eine Kante (9) aufweist, die mit einem oder mehreren Löchern versehen ist, wobei die Verschleißschutzanordnung (10) Folgendes umfasst:
einen Verschleißschutz (12);
einen Befestigungsbügel (11), der zur Befestigung an der Verschleißschutz (12) konfiguriert ist; und
einen Schnelllösestift (13) zum Sichern der Verschleißschutzanordnung (10) an der Arbeitswerkzeugkante (9); **dadurch gekennzeichnet, dass**
der Befestigungsbügel (11) weiter eine Befestigungsfläche zur Befestigung an dem Verschleißschutz (12) umfasst, wobei die Befestigungsfläche einen oder mehrere Scherlaschen (23) umfasst.

2. Verschleißschutzanordnung (10) nach Anspruch 1, wobei der Befestigungsbügel (11) zur lösbaren Befestigung an dem Verschleißschutz (12) konfiguriert ist.

3. Verschleißschutzanordnung (10) nach Anspruch 1 oder Anspruch 2, wobei der Befestigungsbügel (11) ein im Allgemeinen C-förmiges Element umfasst.

4. Verschleißschutzanordnung (10) nach einem der vorstehenden Ansprüche, wobei der Befestigungsbügel (11) ein oder mehrere Paare koaxialer Löcher (31) zur Aufnahme des Stiftes (13) umfasst.

5. Verschleißschutzanordnung (10) nach Anspruch 4, weiter umfassend einen losen Kragen (32) zum Ausgleichs eines Spiels zwischen dem einen oder den mehreren koaxialen Löchern (31) und dem Stift (13).

6. Verschleißschutzanordnung (10) nach Anspruch 1, wobei der Verschleißschutz (12) ein oder mehrere Sacklöcher (24) zur Aufnahme der Scherlaschen (23) des Befestigungsbügels (11) umfasst.

7. Verschleißschutzanordnung (10) nach einem der vorstehenden Ansprüche, wobei der Verschleißschutz (12) ein oder mehrere Durchgangslöcher (25) zum Aufnehmen von Befestigungselementen (26) zur Befestigung des Verschleißschutzes (12) an dem Befestigungsbügel (11) umfasst.

8. Verschleißschutzanordnung (10) nach Anspruch 7, wobei das eine oder die mehreren Durchgangslöcher (25) angesenkt sind.

9. Verschleißschutzanordnung (10) nach Anspruch 7 oder Anspruch 8, abhängig von Anspruch 7, wobei das eine oder die mehreren Sacklöcher (24) und das eine oder die mehreren Durchgangslöcher (25) zusammenfallen.

10. Verschleißschutzanordnung (10) nach einem der vorstehenden Ansprüche, weiter umfassend einen Verriegelungsmechanismus (34) zum Verriegeln des Stiftes (13).

11. Verschleißschutzanordnung (10) nach Anspruch 10, wobei der Verriegelungsmechanismus (34) ein Klappsplint ist.

12. Arbeitsmaschine, die ein Arbeitswerkzeug (6) aufweist, umfassend ein schaufelähnliches Element (8), das eine Kante (9) aufweist, die mit einem oder mehreren Löchern versehen ist, und weiter umfassend mindestens eine Verschleißschutzanordnung (10) nach einem der vorstehenden Ansprüche.

13. Arbeitsmaschine nach Anspruch 12, wobei das Arbeitswerkzeug (6) eine Schaufel ist.

14. Arbeitsmaschine nach Anspruch 13, wobei die Schaufel eine Ladeschaufel ist.

## Revendications

1. Ensemble de tampon d'usure (10) pour un outil de travail (6) comprenant un élément de type benne (8) ayant un bord (9) pourvu d'un ou plusieurs trous, l'ensemble de tampon d'usure (10) comprenant :
un tampon résistant à l'usure (12) ;
une potence de montage (11) configurée pour être fixée au tampon résistant à l'usure (12) ; et
une broche à libération rapide (13) pour fixer l'ensemble de tampon d'usure (10) au bord (9) de l'outil de travail ; **caractérisé en ce que**
la potence de montage (11) comprend en outre une surface de fixation pour la fixer au tampon résistant à l'usure (12), la surface de fixation comprenant un ou plusieurs ressauts à cisaillement (23).

2. Ensemble de tampon d'usure (10) selon la revendication 1, dans lequel la potence de montage (11) est configurée pour une fixation libérable au tampon résistant à l'usure (12).

3. Ensemble de tampon d'usure (10) selon la revendication 1 ou la revendication 2, dans lequel la potence de montage (11) comprend un élément de forme générale en C.

4. Ensemble de tampon d'usure (10) selon l'une quelconque des revendications précédentes, dans lequel la potence de montage (11) comprend une ou plusieurs paires de trous axiaux (31) pour recevoir la broche (13).

5. Ensemble de tampon d'usure (10) selon la revendication 4, comprenant en outre un collier lâche (32) pour rattraper le jeu entre les un ou plusieurs trous axiaux (31) et la broche (13).

6. Ensemble de tampon d'usure (10) selon la revendication 1, dans lequel le tampon résistant à l'usure (12) comprend un ou plusieurs trous borgnes (24) pour recevoir les ressauts à cisaillement (23) de la potence de montage (11).

7. Ensemble de tampon d'usure (10) selon l'une quelconque des revendications précédentes, dans lequel le tampon résistant à l'usure (12) comprend un ou plusieurs trous traversants (25) pour recevoir des fixations (26) pour la fixation du tampon résistant à l'usure (12) à la potence de montage (11).

8. Ensemble de tampon d'usure (10) selon la revendication 7, dans lequel les un ou plusieurs trous traversants (25) sont contre-alésés.

9. Ensemble de tampon d'usure (10) selon la revendication 7 ou la revendication 8, dans la mesure où elle dépend de la revendication 7, dans lequel les un ou plusieurs trous borgnes (24) et les un ou plusieurs trous traversants (25) sont coïncidents.

10. Ensemble de tampon d'usure (10) selon l'une quelconque des revendications précédentes, comprenant en outre un mécanisme de verrouillage (34) pour verrouiller la broche (13).

11. Ensemble de tampon d'usure (10) selon la revendication 10, dans lequel le mécanisme de verrouillage (34) est une esse d'essieu.

12. Machine de travail ayant un outil de travail (6) comprenant un élément de type benne (8) ayant un bord (9) pourvu d'un ou plusieurs trous et comprenant en outre au moins un ensemble de tampon d'usure (10) selon l'une quelconque des revendications précédentes.

13. Machine de travail selon la revendication 12, dans lequel l'outil de travail (6) est une benne.

14. Machine de travail selon la revendication 13, dans lequel la benne est une benne de chargeuse.
